# EUROPEAN PATENT APPLICATION

(11) **EP 4 787 464 A1**
(43) Date of publication of application: **05.08.2026**
(21) Application number: 25224499.1
(22) Date of filing: 17.12.2025
(51) Int. Cl.: H01M 4/1397, H01M 4/58, H01M 4/62

(54) **SELF-SUPPORTING ELECTRODE MEMBRANE AND MANUFACTURING METHOD THEREOF**

(30) Priority: 29.01.2025 JP 2025013032
(71) Applicant: Toyota Jidosha Kabushiki Kaisha, Toyota-shi, Aichi-ken 471-8571 (JP)
(72) Inventor: SATO, Tomohiro, Aichi-ken, 471-8571 (JP); MORIYAMA, Satoshi, Aichi-ken, 471-8571 (JP)
(74) Representative: Kuhnen & Wacker Patent- und Rechtsanwaltsbüro PartG mbB

(57) **Abstract**

A self-supporting electrode membrane may include: active material particles comprising an olivine-type cathode material having electron-conductive material coating; a conductive additive; a first polymer having a form covering the electron-conductive material coating; and a second polymer having a fibrillated form.

## Description

### CROSS REFERENCE TO RELATED APPLICATIONS

This application claims priority from Japanese Patent Application No. 2025-13032 filed on January 29, 2025. The entire content of the priority application is incorporated herein by reference.

### TECHNICAL FIELD

The art disclosed herein relates to a self-supporting electrode membrane and a manufacturing method thereof.

### BACKGROUND ART

In recent years, self-supporting electrode membranes are manufactured by dry processing methods. For example, a self-supporting electrode membrane including a composite binder containing polyvinylpyrrolidone (PVP) and polyethylene oxide (PEO) in addition to polytetrafluoroethylene (PTFE) is known (JP 2024-26242 A). JP 2024-26242 A describes preparing a mixture for an electrode membrane comprising a composite binder, active material particles, and a conductive additive, subsequently adding a small amount of solvent to the mixture, applying shear force to fibrillate the PTFE, and then pressing the mixture to form a self-supporting electrode membrane.

### SUMMARY

However, although the method of JP 2024-26242 A is a dry process, the solvent is used. Further, in a dry process, when a mixture for an electrode membrane is prepared by mixing a binder, active material particles, and a conductive additive, there were cases where a large friction occurred between the active material particles. Also, there were cases where, if the active material particles are coated, for example with an electron-conductive material, such a coating may be damaged, which could result in an increase in the powder resistance of the electrode membrane.

The present teachings provide an art which allows to suppress or avoid an increase in the power resistance in a self-supporting electrode membrane.

One aspect of the present teachings relates to a self-supporting electrode membrane. The elf-supporting electrode membrane may comprise active material particles comprising an olivine-type cathode material having an electron-conductive material coating, a conductive additive, a first polymer having a form of covering the electron-conductive material coating; and a second polymer having a fibrillated form.

According to the above-described self-supporting electrode membrane, the first polymer has the form that covers the electron-conductive material coating, by which damage to the electron-conductive material coating can be suppressed or avoided. The second polymer has the fibrillated form, by which the active material particles and the conductive additive are constrained and integrated. As a result of this, an increase of the powder resistance in the self-supporting electrode membrane can be suppressed or avoided.

Another aspect of the present teachings relates to a method for manufacturing an electrode sheet for a self-supporting electrode membrane. The method may comprise preparing a first mixture by mixing active material particles comprising an olivine-type cathode material having an electron-conductive material coating, a conductive additive, and a first polymer that is not fibrillatable, in a state where the first polymer is fluidized, preparing a second mixture by mixing the first mixture with a second polymer that is fibrillatable, the second mixture comprising the second polymer in a fibrillated state, and fabricating the electrode sheet using the second mixture.

In the preparation of the first mixture, the first mixture is prepared in the state where the first polymer is fluidized. As a result, friction between the active material particles is reduced, and damage to the electron-conductive material coating on the surfaces of the active material particles is suppressed or diminished. Further, in the preparation of the second mixture, the active material particles having the electron-conductive material coating with reduced damage and the conductive additive are constrained and integrated by the fibrillated second polymer. Thus, an increase in the powder resistance of an electrode sheet and of the self-supporting electrode membrane can be suppressed or mitigated.

Also, the use of solvent can be avoided by mixing in the state where the first polymer is fluidized during preparation of the first mixture.

### BRIEF DESCRIPTION OF DRAWINGS

FIG. 1 illustrates a cross-sectional view showing an example of a structure of an electrode disclosed herein.
FIG. 2 illustrates a process flow diagram showing an example of a method of manufacturing an electrode sheet disclosed herein.

### DETAILED DESCRIPTION

The self-supporting electrode membrane and the manufacturing method thereof are as described above, and these disclosures may take the following aspects.

In another aspect of the self-supporting electrode membrane, the first polymer may have a melting point of 60°C or higher and 260°C or lower. By using such first polymer, the first polymer is molten and easily fluidized in the manufacturing process of the self-supporting electrode membrane, friction between the active material particles can be easily mitigated. Such first polymer can easily take the form covering the electron-conductive material coating.

In another aspect of the above-described self-supporting electrode membrane, the first polymer may be one or more selected from the group consisting of polyethylene oxide, polyacrylonitrile, polyvinyl chloride, polymethyl methacrylate, polyvinylidene fluoride, ethylene carbonate, polyethylene, polypropylene, polystyrene, ABS resin, polyacrylate, polyvinyl alcohol, and polycarbonate. These polymers are capable of exhibiting fluidity at a temperature of 60°C or higher and 260°C or lower. The first polymer may be one or more selected from the group consisting of polyethylene oxide, polyacrylonitrile, polyvinyl chloride, polymethyl methacrylate, and polyvinylidene fluoride. These polymers are ion-conductive, and in certain cases can suppress a decrease in lithium-ion conductivity.

In yet another aspect of the above-described self-supporting electrode membrane, the self-supporting electrode membrane may comprise the first polymer in an amount of 0.1 mass% or more and 3.0 mass% or less based on a total mass of the self-supporting electrode membrane. According to such configuration, friction between the active material particles can be effectively mitigated, and also an increase in the powder resistance in the self-supporting electrode membrane can be suppressed or avoided.

In yet another aspect of the above-described self-supporting electrode membrane, the second polymer may comprise polytetrafluoroethylene. According to such configuration, the fibrillated second polymer effectively constrains and ingrates the self-supporting electrode membrane.

The present disclosure discloses an electrode comprising the self-supporting electrode membrane according to any of the aspects. The present disclosure further discloses a secondary battery comprising the above-described electrode.

In another aspect of the manufacturing method of the above-described electrode sheet, the first polymer may have a melting point of 60°C or higher and 260°C or lower. By having a melting point within the above-described temperature range, the first polymer can be readily fluidized upon heating, thereby facilitating a reduction in friction between the active material particles. Also, in this aspect, the preparing of the second mixture may include mixing the first mixture and the second polymer in the state where the first polymer is fluidized. According to such configuration, because the first polymer is fluidized and thus friction between the active material particles is reduced also while the second mixture is prepared, damage to the electron-conductive material coating can be suppressed.

The present teachings also provide a method for manufacturing an electrode comprising a self-supporting electrode membrane. More specifically, the method may comprise: preparing a first mixture by mixing active material particles comprising an olivine-type cathode material comprising an electronic conductive material coating, a conductive additive, and a first polymer that is not fibrillatable, in a state where the first polymer is fluidized; preparing a second mixture by mixing the first mixture with a second polymer that is fibrillatable, the second mixture comprising the second polymer in a fibrillated state; fabricating an electrode sheet for the self-supporting electrode membrane using the second mixture; and fabricating the electrode comprising the self-supporting electrode membrane by bonding the electrode sheet to a current collector.

Hereafter, with reference to drawings as necessary, a self-supporting electrode membrane and an electrode as well as a method of manufacturing an electrode sheet for a self-supporting electrode membrane will be described. Here, in the present teachings, the self-supporting electrode membrane and the electrode are, for example, a self-supporting electrode membrane and a positive electrode that constitute a cathode of a lithium-ion secondary battery.

### (Self-Supporting Electrode Membrane and Electrode)

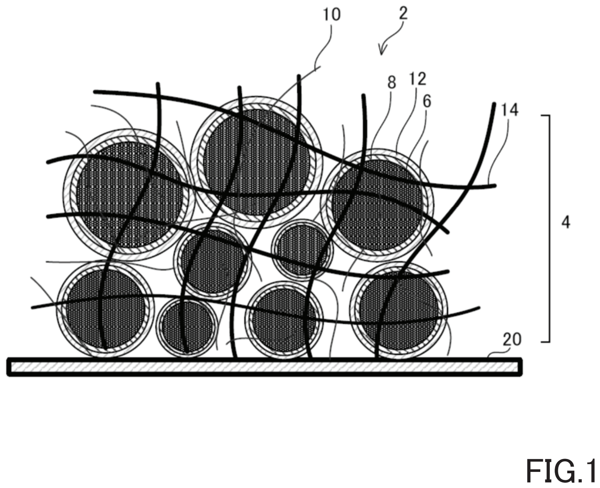

FIG. 1 illustrates an example of a cross section of a cathode (positive electrode) 2 of a lithium-ion secondary battery (hereafter simply termed "secondary battery"). The cathode 2 comprises a self-supporting electrode membrane (hereafter simply termed "electrode membrane") 4 and a current collector 20. Examples of the current collector 20 include an aluminum foil or nickel for example, although the current collector 20 is not limited in particular. Although not illustrated, the secondary battery comprises a separator including electrolyte and an anode (negative electrode). The separator is constituted of known materials, such as a polyolefin-based microporous membrane having fine pores. The separator is impregnated with a liquid electrolyte containing a lithium salt, such as lithium hexafluorophosphate (LiPF₆), with an organic solvent such as ethylene carbonate (EC), dimethyl carbonate (DMC), and diethyl carbonate (DEC) as a medium therefor. Here, a solid electrolyte layer may be used instead of these. The anode of the secondary battery can comprise an electrode membrane of the anode and a current collector that are constituted of known materials and with known configurations, as necessary.

As illustrated in FIG. 1, the electrode membrane 4 contains active material particles 6, a conductive additive 10, a first polymer 12, and a second polymer 14.

### (Active Material Particles)

The active material particles 6 can comprise particles comprising a known olivine-type cathode (positive electrode) material. Examples of the olivine-type cathode electrode material include lithium iron phosphate (LiFePO₄, LFP), lithium manganese iron phosphate (LiMn_{(1-d)}F_{d}PO₄, LMFP), and lithium manganese phosphate (LiMnPO₄, LMP). The active material particles 6 can comprise one or more of these listed ones. The active material particles 6 can comprise an arbitrary average particle diameter. The active material particles 6 may have a form of secondary aggregates of the respective particles.

### (Electron-Conductive Material Coating)

The active material particles 6 comprises electron-conductive material coating (hereafter simply termed "coating") 8 on their surfaces. The coating 8 contributes to improvement in electron conductivity of the active material particles 6. The electron-conductive material contained in the coating 8 can comprise known material(s). Examples of the electron-conductive material include carbon-based materials such as graphite and semigraphite and metal nanoparticles.

The coating 8 is disposed to cover at least a part of each of the surfaces of the active material particles 6. Here, even when the coating 8 covers the entity of each of the surfaces of the active material particles 6, it is acceptable so long as lithium ions can be inserted into and extracted through the coating. The shape/form of the coating 8 is not specifically limited. When the active material particles 6 serve as cores, the coating 8 may be a substantially uniform coat layer, or it may be formed by a carbonaceous material of an arbitrary shape being adhered to the surfaces of the active material particles 6. The former includes, for example, a carbonaceous material coating obtained by carbonization of an organic substance applied to the surfaces of the active material particles 6. The latter includes, for example, a coating obtained by disposing a carbonaceous material to be adhered onto the surfaces of the active material particles 6 by mechanochemical mixing or a similar method.

The membrane thickness of the coating 8 is not specifically limited. For example, the thickness may be 0.1nm or more and 10nm or less, or may be 0.5nm or more and 3nm or less.

### (Conductive Additive)

The conductive additive 10 is an additive for enhancing electron conductivity of the electrode membrane 4. The conductive additive 10 is held in a distributed manner in the electrode membrane 4, and for example, may have a form that is held in the distributed manner such that the conductive additive 10 is interposed between the active material particles 6 covered with the first polymer 12 or being adhered on the surfaces of these active material particles 6.

The conductive additive 10 is not particularly limited and can comprise any known conductive additive. Examples of the conductive additive 10 include: graphite such as natural graphite, artificial graphite; carbon blacks such as acetylene black, Ketjen black, channel black, furnace black, lamp black, and summer black; conductive fibers such as carbon fibers and metal fibers; a carbon material such as graphene and carbon nanotube; fluorinated carbon; metal powders such as aluminum and nickel powders; a conductive whisker such as zinc oxide and potassium titanate; a conductive metal oxide such as titanium oxide; and a conductive material such as polyphenylene derivatives. As the carbon nanotube, a single-walled carbon nanotube (SW-CNT) and a multi-walled carbon nanotube (MW-CNT) including a double-walled carbon nanotube may be preferred. The conductive additive 10 can comprise one or more of these listed materials.

The content of the conductive additive 10 in the electrode membrane 4 is not specifically limited, but for example is 0.01 mass% or more and 5 mass% or less based on the total mass of the electrode membrane 4. Further for example, it is 1.0 mass% or more and 3.0 mass% or less, and is 1.0 mass% or more and 2.0 mass% or less.

### (First Polymer)

The first polymer 12 may be contained in the electrode membrane 4 by having the form covering the coating 8. The first polymer 12 can cover a part or the entity of the coating 8 as long as the first polymer 12 does not impair the function of the coating 8.

Because the first polymer 12 has the form covering the coating 8, in the electrode membrane 4, not only the coating 8 can be regarded as being suppressed from being damaged but also the active material particles 6 can be regarded as being suppressed from being damaged. It can be understood that, since the first polymer 12 is included in such form in the electrode membrane 4, during the mixture with the conductive additive 10, for example, friction between the active material particles 6 is reduced, resulting in reduced damage to the coating 8. Further, the damage to the active material particles 6 themselves is also reduced. As such, because the first polymer 12 is contained in the electrode membrane 4 in the above-mentioned form, decrease in the powder resistance of the electrode membrane 4 can be suppressed.

Because the first polymer 12 covers the coating 8 on the surfaces of the active material particles 6, the first polymer 12 is polymer which does not undergo fibrillation. Also, it may be preferable that the first polymer 12 has a melting point of 60°C or higher and 260°C or lower. Because the first polymer 12 has a melting point within such temperature range, the first polymer 12 is easily fluidized and friction between the active material particles 6 can be effectively reduced.

The melting point of the first polymer 12 is, for example, 70°C or higher, 75°C or higher, 80°C or higher, or 90°C or higher, and is, for example, 240°C or lower, 230°C or lower, 220°C or lower, or 200°C or lower. The melting point range of the first polymer 12 can also be set by appropriately combining the above-mentioned lower and upper temperature limits, in addition to the above-mentioned range. For example, it is 60°C or higher and 240°C or lower; 60°C or higher and 200°C or lower; 60°C or higher and 180°C or lower; or 60°C or higher and 120°C or lower.

The first polymer 12 is not specifically limited as long as the first polymer 12 is fluidized and interposed between the active material particles 6 so as to cover the coating 8 of the active material particles 6, by which friction between the active material particles 6 is reduced. Examples of the first polymer 12 include polyethylene oxide (PEO), poly(propylene oxide), polyacrylonitrile, polyvinyl chloride (PVC), polymethyl methacrylate (PMMA), polyvinylidene fluoride (PVDF), ethylene carbonate, polyethylene, polypropylene, polystyrene, ABS resin (acrylonitrile-butadiene-styrene), polyacrylate, polymethacrylate, polyvinyl alcohol (PVA), and polycarbonate. The first polymer 12 can comprise one or more of these listed materials. The first polymer 12 can serve as a binder for the electrode membrane 4.

The first polymer 12 may be one or more selected from the group consisting of PEO, polyacrylonitrile, polyvinyl chloride, polymethyl methacrylate, and polyvinylidene fluoride. These polymers are ion-conductive, and thus can suppress decrease in lithium-ion conductivity.

Herein, each of the above polymers includes, for example, homopolymers and copolymers consisting of the basic structural units based on the name of the polymer and structural unit(s) in which those basic structural units are modified. For example, PEO can include homopolymers and copolymers comprising structural units derived from ethylene oxide and/or modified structural units thereof, and can take various forms such as linear, comb-shaped, or crosslinked structures. Such polymers are known to those skilled in the art and, where appropriate, can be obtained or produced by those skilled in the art.

For example, the first polymer 12 can comprise PEO such as a homopolymer with structural units derived from ethylene oxide having a number-average molecular weight (Mn) of 3,000 or more and 10,000,000 or less. The number-average molecular weight of such PEO is, for example, 3,000 or more and 50,000 or less; 8,000 or more and 50,000 or less; or 10,000 or more and 30,000 or less.

The content of the first polymer 12 in the electrode membrane 4 is not limited in particular, but simply needs to suppress the damage to the coating 8. If the content of the first polymer 12 is, for example, 0.1 mass% or more and 3.0 mass% or less based on the total mass of the electrode membrane 4, this can be effective in reducing friction during fabrication of the electrode membrane 4, protecting the coating 8, and suppressing decrease in powder resistance in the electrode membrane 4. For example, it is 0.5 mass% or more, 0.7 mass% or more, 0.8 mass% or more, 1.0 mass% or more, 1.5 mass% or more, or 2.0 mass% or more. Also, it is 2.5 mass% or less, 2.0 mass% or less, 1.5 mass% or less, or 1.2 mass% or less. The content range of the first polymer 12 can be set by appropriately combining the lower and upper limits of the above ranges. For example, it is 0.7 mass% or more and 3.0 mass% or less, 0.8 mass% or more and 2.0 mass% or less, 0.8 mass% or more and 1.5 mass% or less, or 0.8 mass% or more and 1.2 mass% or less.

### (Second Polymer)

The electrode membrane 4 contains the second polymer 14. In the electrode membrane 4, the second polymer 14 has a fibrillated form. For example, the second polymer 14 exists in a fibrillated state such that the second polymer 14 entangles the outside of the active material particles 6 covered with the coating 8 in a fibrous form.

As the second polymer 14, a fibrillatable polymer is used. When shear force is applied to the second polymer 14, the second polymer 14 is fibrillated. The fibrillated second polymer 14 tangles in the active material particles 6 and the conductive additive 10 and constrains these, which gives the electrode membrane 4 mechanical strength.

The second polymer 14 is not specifically limited as long as the second polymer 14 is a fibrillatable polymer. The fibrillatable polymer is known to those skilled in the art. Examples of the second polymer 14 include polytetrafluoroethylene (PTFE), polyolefins, polyalkylenes, polyethers, styrene butadiene, polysiloxanes and polysiloxane copolymers, branched polyethers, polyvinyl ethers, and copolymers thereof. Examples of the second polymer 14 also include cellulose materials including carboxyalkyl celluloses like carboxymethyl cellulose (CMC). The second polymer 14 can comprise one or more of these listed materials. For example, it may be preferable that the second polymer 14 is PTFE. This is because PTFE is superior in fibrillability and binder performance.

It is preferable that the second polymer 14 is fibrillatable at a temperature of 60°C or higher and 260°C or lower. Such temperature range corresponds to the temperature range of a preferable melting point of the first polymer 12. Because the second polymer 14 can fibrillate within the range where the first polymer 12 is fluidized, a lubricating effect from the first polymer 12 may be expected during complexation of the active material particles 6 by the second polymer 14. Preferably, the second polymer 14 is heat-resistant at the temperature at which the first polymer 12 becomes fluidized. From this viewpoint, the second polymer 14 preferably has, for example, a melting point exceeding 260°C.

The content of the second polymer 14 in the electrode membrane 4 is not limited in particular, as long as the second polymer 14 can constrain and integrate the electrode membrane 4. The content of the second polymer 14 is, for example, 1.0 mass% or more and 10 mass% or less based on the total mass of the electrode membrane 4. It is also, for example, 1.5 mass% or more, 2.0 mass% or more, 2.5 mass% or more, or 3.0 mass% or more. It is also 8.0 mass% or less, 6.0 mass% or less, or 5.0 mass% or less. In addition to the above range, the range of the content of the second polymer 14 can be set by appropriately combining the lower and upper limits of the above ranges. For example, it is 1.5 mass% or more and 5.0 mass% or less, 2.0 mass% or more and 5.0 mass% or less, or 2.5 mass% or more and 4.5 mass% or less.

Here, if it is necessary, the electrode membrane 4 may additionally contain a polymer which serves as a binder between the active material particles 6, the conductive additive 10, and the current collector 20, for example. Such polymer can comprise, besides the first polymer 12 and the second polymer 14 as aforementioned, a known polymer that can be implemented as this type of electrode. These polymers may be in particle form.

The above-described electrode membrane 4 has a thickness of, for example, 10 µm or more and 500 µm or less, and constitutes the cathode 2 together with the current collector 20.

According to such cathode 2, the first polymer 12 has the form covering the coating 8 in the electrode membrane 4. According to this form, damage to the coating 8 can be suppressed, by which the increase in powder resistance can also be suppressed. It can be understood from such configuration of the first polymer 12 that during preparation of the mixtures for the electrode membrane 4, the first polymer 12 is interposed so as to cover the coating 8 and thus friction between the active material particles 6 is reduced. Due to this, even though the electrode membrane 4 is produced through a dry process using the fibrillated second polymer 14, the coating 8 can be suppressed from being damaged in that dry process also.

The second polymer 14 is distributed substantially uniformly relative to the active material particles 6 comprising the coating 8 and the conductive additive 10 in the electrode membrane 4. Further, the second polymer 14 can constrain the coating 8 of the active material particles 6 from outside thereof in a fibrous form. From this viewpoint also, the increase in powder resistance can be suppressed.

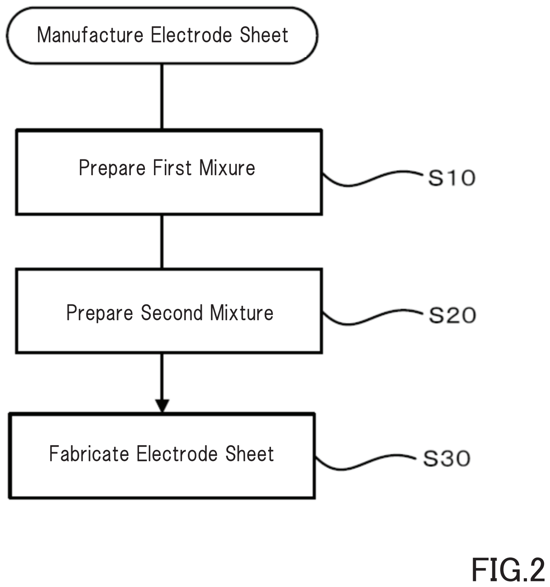

Next, a method of manufacturing an electrode sheet for manufacturing the electrode membrane 4 as aforementioned will be described with reference to FIG. 2. Here, the electrode sheet is layered on the current collector 20, and constitutes the electrode membrane 4 by being integrated with the current collector 20 by thermal pressing, as appropriate. FIG. 2 illustrates an example of a manufacturing method of the electrode sheet.

This manufacturing method comprises: a step S10 of preparing a first mixture; a step S20 of preparing a second mixture by using the first mixture; and a step S30 of fabricating an electrode sheet for the electrode membrane 4 by using the second mixture.

### (Step S10 of Preparing First Mixture)

The step S10 includes mixing the active material particles 6 comprising the coating 8, the conductive additive 10, and the first polymer 12 that does not undergo fibrillation to prepare the first mixture. It is preferable that the first mixture does not contain the second polymer 14 that is fibrillatable. If the second polymer 14 is contained, protection and lubrication effects for the coating 8 achieved from the first polymer 12 can be decreased. As a result of this, it will be difficult for the first polymer 12 to take the form covering the coating 8, and the coating 8 will be more prone to being damaged. Also, distributive uniformity of the second polymer 14 and the conductive additive 10 could be decreased as well.

The first mixture contains the active material particles 6, the conductive additive 10, and the first polymer 12, and at least may be a mixture which has the form where the first polymer 12 covers the surfaces of the active material particles 6, that is, the surface of the ion-conductive coating 8. In the step S10, the first mixture can be obtained by mixing these materials to be mixed in a state where the first polymer 12 is fluidized. For example, when the first polymer 12 is a polymer with a melting point of 60°C or higher and 260°C or lower, the first mixture can be obtained by mixing the materials under a suitable shear force at a temperature of 60°C or higher and 260°C or lower where the polymer melts and is fluidized.

Because the first polymer 12 melts and is fluidized, friction between the active material particles 6 is reduced. Such effects can be attributed to the fact that the first polymer 12 has the form covering the coating 8 during the mixing. By using the first polymer 12 in the fluidized state, even though solvent is not used, the first polymer 12 functions as if it is lubricant in the mixing of the active material particles 6 and the conductive additive 10, by which the mixing can be facilitated. As a result of this, damage to the coating 8 can be suppressed during mixing with the conductive additive 10.

The step S10 may include plural steps as long as the first mixture can be obtained. For example, the active material particles 6 and the first polymer 12 may be mixed in advance in the state where the first polymer 12 is fluidized so that the form of the first polymer 12 covering the surface of the coating 8 is formed, and then, the conductive additive 10 may be added to the mixture with the first polymer 12 being kept as fluidized. By these steps, it is possible to effectively suppress the coating 8 from being exposed to strong friction.

In the preparation of the first mixture, the conductive additive 10 and the first polymer 12 can be used within the above-mentioned content ranges relative to the total mass of the second mixture to be ultimately obtained. The amount of the active material particles 6 can be used so as to constitute the remainder of the total mass of the second mixture, exclusive of the conductive additive 10, the first polymer 12, and the second polymer 14.

The step S10 can be performed using a known mixing apparatus. Examples of the mixing apparatus include: for example, apparatus provided with a rotary element such as a roll, a rotor, paddle(s), blade(s), gear(s), and screw(s), such as various kneaders such as a pressure kneader, a Banbury mixer, a Henschel mixer, a twin-screw extruder, and also a mixture apparatus that can be used for known shear mixture including various mills including a jet mill, a roller mill, and a hammer mill. Those skilled in the art would be able to set conditions for mixing such as shear force and/or mixing time so as to achieve a suitable mixing state for the active material particles 6 and the conductive additive 10.

### (Step S20 of Preparing Second Mixture)

The step S20 includes mixing the first mixture and the second polymer 14 that is fibrillatable, and thus preparing the second mixture having the state in which the second polymer 14 is in the fibrillated state.

The second mixture contains the second polymer 14 in the fibrillated state in addition to the active material particles 6, the conductive additive 10, the first polymer 12 that are derived from the first mixture. The second mixture can be obtained by mixing these materials to be mixed so that the second polymer 14 is fibrillated.

By preparing the first mixture and adding the second polymer 14 thereto such that the second polymer 14 can be fibrillated, the second mixture having the structure of the electrode membrane 4 or a structure approximate thereto can be obtained. That is, in the second mixture, the first polymer 12 has the form covering the coating 8 of the active material particles 6 and the second polymer 14 has a fibrillated form. Further, the second polymer 14 constrains the active material particles 6 by entangling them in a fibrous form from outside of the active material particles 6.

It is preferable that the step S20 is conducted in a state where the first polymer 12 melts and is fluidized, similar to the step S10. That is, it is preferable that the first polymer 12 is mixed at a temperature of 60°C or higher and 260°C or lower based on the melting point of the first polymer 12. According to these, in the step S20 also, the first polymer 12 functions as a lubricant, can facilitate the mixing of the step S20, and can suppress damage to the coating 8.

In the preparation of the second mixture, the second polymer can be used within the above-mentioned content ranges relative to the total mass of the second mixture to be ultimately obtained.

The step S20 may be performed using a known mixing apparatus, similar to the step S10. Those skilled in the art would be able to set conditions for mixing such as shear force and/or mixing time so as to achieve a suitable mixing state for fibrillation of the second polymer 14 and the materials to be mixed.

### (Step S30 for Fabricating Electrode Sheet for Electrode Membrane)

The step S30 comprises fabricating an electrode sheet for manufacturing the electrode membrane 4 using the second mixture. Here, the thickness of the electrode sheet is approximately 10 µm or more and 2000 µm or less, or 10 µm or more and 1000 µm or less. The sheet forming process is not particularly limited. For example, it can be performed by calendaring, where the second mixture is supplied between rotating rollers and sheeted under heat and pressure without using a support. Alternatively, it can be performed by pressing, where an electrode composite mixture is supplied into a suitable mold and compressed under heat and pressure.

The electrode sheet to be obtained has a predetermined mechanical strength by comprising the same existing forms of the active material particles 6, the conductive additive 10, and the first polymer 12 and the same existing form of the second polymer 14 as these in the aforementioned electrode membrane 4. Due to this, the electrode membrane 4 which is self-standing without a support, can be configured.

Further, by using such electrode sheet, the cathode 2 and a secondary battery can be fabricated. Firstly, the current collector 20 and the electrode sheet are layered. Further, the electrode sheet is compressed and compacted by applying pressure thereto at a predetermined temperature to achieve a thickness of 10 µm or more and 500 µm or less, and then the electrode membrane 4 is obtained. At the same time as the electrode membrane 4 is obtained, the cathode 2 where the electrode membrane 4 is integrated with the current collector 20 is obtained. The secondary battery comprising the cathode 2 can fabricated with a known method, where appropriate.

In the electrode membrane 4 as obtained in the above-mentioned manner, damage to the coating 8 on the surfaces of the active material particles 6 can be suppressed, and loss in electron conductivity can be suppressed. Due to this, the cathode 2 and a secondary battery comprising the cathode 2 which can exhibit favorable electrode characteristics can be obtained.

Although in the foregoing description, the electrode membrane 4 has been described, the present teachings provide the cathode 2 comprising the electrode membrane 4 and the secondary battery comprising the cathode 2 in addition to the electrode sheet which is a precursor for the electrode membrane 4. Further, although in the foregoing description, the manufacturing method of the electrode sheet for the electrode membrane 4 has been described, the present teachings also provide a manufacturing method for a mixture for an electrode membrane, the method comprising: preparing a first mixture; and preparing a second mixture. Furthermore, a method of manufacturing an electrode is also provided, where the method comprises, in addition to the processes in the manufacturing method of the electrode sheet, fabricating the electrode membrane 4 by using the above-described electrode sheet. Furthermore, a method of manufacturing a secondary battery is also provided, where the method comprises, in addition to the processes in the manufacturing method of the electrode sheet, a process of fabricating a secondary battery.

It can be understood from the description herein that the present teachings comprise the following features.
[1] A self-supporting electrode membrane, comprising:
   active material particles comprising an olivine-type cathode material having electron-conductive material coating;
   a conductive additive;
   a first polymer having a form covering the electron-conductive material coating; and
   a second polymer having a fibrillated form.
[2] The self-supporting electrode membrane according to [1], wherein the first polymer has a melting point of 60°C or higher and 260°C or lower.
[3] The self-supporting electrode membrane according to [1] or [2], wherein the first polymer is one or more selected from the group consisting of polyethylene oxide, polyacrylonitrile, polyvinyl chloride, polymethyl methacrylate, polyvinylidene fluoride, ethylene carbonate, polyethylene, polypropylene, polystyrene, ABS resin, polyacrylate, polyvinyl alcohol, and polycarbonate.
[4] The self-supporting electrode membrane according to any of [1] to [3], wherein the self-supporting electrode membrane comprises the first polymer in an amount of 0.1 mass% or more and 3.0 mass% or less based on a total mass of the self-supporting electrode membrane.
[5] The self-supporting electrode membrane according to any of [1] to [4], wherein the second polymer comprises polytetrafluoroethylene.
[6] An electrode comprising the self-supporting electrode membrane according to any of [1] to [5].
[7] A secondary battery comprising the electrode according to [6].
[8] A method for manufacturing an electrode sheet for a self-supporting electrode membrane, the method comprising:
   preparing a first mixture by mixing active material particles comprising an olivine-type cathode material having an electron-conductive material coating, a conductive additive, and a first polymer that is not fibrillatable, in a state where the first polymer is fluidized;
   preparing a second mixture by mixing the first mixture with a second polymer that is fibrillatable, the second mixture comprising the second polymer in a fibrillated state; and
   fabricating the electrode sheet using the second mixture.
[9] The method according to [8], wherein the first polymer has a melting point of 60°C or higher and 260°C or lower.
[10] The method according to [8] or [9], wherein the preparing of the second mixture includes mixing the first mixture and the second polymer in the state where the first polymer is fluidized.
[11] A method for manufacturing an electrode comprising a self-supporting electrode membrane, the method comprising:
   preparing a first mixture by mixing active material particles comprising an olivine-type cathode material comprising an electronic conductive material coating, a conductive additive, and a first polymer that is not fibrillatable, in a state where the first polymer is fluidized;
   preparing a second mixture by mixing the first mixture with a second polymer that is fibrillatable, the second mixture comprising the second polymer in a fibrillated state;
   fabricating an electrode sheet for the self-supporting electrode membrane using the second mixture; and
   fabricating the electrode comprising the self-supporting electrode membrane by bonding the electrode sheet to a current collector.

### EXAMPLES

Here, examples embodying the disclosure of the present teachings will be described, but these examples are merely for illustrative purposes of the present teachings, and are not intended for limitation thereof.

In the present example, a mixture for a cathode membrane of a lithium-ion secondary battery was prepared, an electrode sheet was fabricated, and the powder resistance was measured by the following methods.

For preparing the mixture, LFP (lithium iron phosphate) as the olivine-type cathode material (active material particles) with a carbon coating, MW-CNT as the conductive additive, PEO (number-average molecular weight: approximately 20,000, melting point 60°C) as the first polymer, and PTFE as the second polymer were used.

### (Example 1)

For the electrode membrane mixture of example 1, the first mixture containing the active material particles, the conductive additive, and the first polymer, but not containing the second polymer was prepared, and subsequently, the second mixture as an electrode membrane mixture which contains the second polymer was prepared. The mass ratio of the respective materials in the second mixture was set to be 94.1/1.5/1.0/3.4 for active material particles/conductive additive/PEO/PTFE.

First, the active material particles (LFP), the conductive additive (MW-CNT), and the first polymer (PEO) were blended at the above mass ratio. Using a kneader, they were mixed under the following mixing conditions of 80°C, 60 rpm, and 600 seconds, and the first mixture was yielded.

Next, the second polymer (PTFE) was blended into the first mixture to achieve the specified mass ratio, and using the aforementioned kneader, the mixture was mixed under the mixing conditions of 160°C, 60 rpm, and 30 seconds and the second mixture which is the mixture for the electrode membrane was yielded.

The second mixture was further shaped using a calendaring device at 160°C, with a roll clearance of 340 µm, a roll 1 speed of 1.8 m/s, and a roll 2 speed of 2.4 m/s, and an electrode sheet was yielded. The volume resistivity (Ω·cm) was measured according to a standard method for powder resistance measurement for samples prepared from this electrode sheet using a predetermined method. The results are shown in Table 1. For reference, the total electrical energy about required to yield the first and second mixtures in the kneader is also shown as processing energy.

### (Comparative Example 1)

For comparative example 1, the same mixing conditions as example 1 were used, except that the first polymer (PEO) was not used in the first mixture, and instead of the first polymer, the mass ratio of the active material particles was increased. The first mixture, the second mixture, and the electrode sheet of comparative example 1 were yielded, and the volume resistivity was measured in the same manner as example 1. In comparative example 1, the mass ratio of the materials (active material particles/conductive additive/PTFE) in the second mixture was 95.1/1.5/3.4. The results are also shown in Table 1.

### (Comparative Example 2)

For comparative example 2, from the start, all the materials of active material particles/ conductive additive/PEO/PTFE were blended at the mass ratio of the second mixture (94.1/1.5/1.0/3.4), and were mixed under the mixing conditions of the first mixture (80°C, 60 rpm, and 600 seconds) and sequentially mixed under the mixing conditions of the second mixture (160°C, 60 rpm, and 30 seconds) to achieve the second mixture, and an electrode sheet was obtained using the same method as example 1. The volume resistivity was measured in the same manner as example 1. The results are shown also in Table 1.

Here, since the mixing was conducted at 80°C, which exceeds the melting point of the first polymer (PEO), through example 1 and comparative examples 1 and 2, the first polymer (PEO) was in a molten and fluidized state in all of the mixing stages.

**[Table 1]**

| Type | Volume Resistivity Ω·cm | Processing Energy J |
|---|---|---|
| Example 1 | 10.7 | 47.4 |
| Comparative Example 1 | 246.9 | 86.6 |
| Comparative Example 2 | 1305.6 | 133.4 |

As shown in Table 1, example 1 exhibited the lowest volume resistivity and also the processing energy was smallest. Furthermore, in example 1, observation of the cross-section of the electrode sheet using a transmission electron microscope revealed that the first polymer, PEO, was observed to have the form covering a carbon coating of the active material particles, while the second polymer, PTFE, was approximately uniformly distributed around the active material particles with the carbon coating and the conductive additive, CNT. Furthermore, the PTFE constrained the active material particles by entangling them in a fibrous form from outside of the active material particles.

In contrast, in comparative example 1, the volume resistivity clearly increased, and the processing energy also increased. This indicates that in the absence of the first polymer (PEO), significant shear force was generated on the mixing, and the carbon coating layer on the active material particles was damaged although the second mixture was prepared stepwise.

Furthermore, comparative example 2 exhibited a volume resistivity significantly exceeding that of comparative example 1, and also the processing energy increased. This was considered because, although the first polymer (PEO) was used, mixing it all at once in the presence of the second polymer (PTFE) prevented the lubricant function due to the fluidization of the first polymer from being fully exerted, accelerated the damage to the carbon coating on the surfaces of the active material particles, and thus lowered the distributing performance of the conductive additive.

The above showed that the electrode sheet and electrode membrane where damage to the carbon coating is suppressed and distributing performance of the conductive additive is ensured can be obtained by the followings: forming a mixture for an electrode membrane by preliminarily mixing the active material particles and the conductive additive with the first polymer, such as PEO, which can melt and be fluidized to thus prepare the first mixture; and then adding the second polymer that is fibrillatable, such as PTFE, to prepare the second mixture.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A self-supporting electrode membrane (4), comprising:
active material particles (6) comprising an olivine-type cathode material having electron-conductive material coating (8);
a conductive additive (10);
a first polymer (12) having a form covering the electron-conductive material coating (8); and
a second polymer (14) having a fibrillated form.

2. The self-supporting electrode membrane (4) according to claim 1, wherein the first polymer (12) has a melting point of 60°C or higher and 260°C or lower.

3. The self-supporting electrode membrane (4) according to claims 1 or 2, wherein the first polymer (12) is one or more selected from the group consisting of polyethylene oxide, polyacrylonitrile, polyvinyl chloride, polymethyl methacrylate, polyvinylidene fluoride, ethylene carbonate, polyethylene, polypropylene, polystyrene, ABS resin, polyacrylate, polyvinyl alcohol, and polycarbonate.

4. The self-supporting electrode membrane (4) according to any one of claims 1 to 3, wherein the self-supporting electrode membrane (4) comprises the first polymer (12) in an amount of 0.1 mass% or more and 3.0 mass% or less based on a total mass of the self-supporting electrode membrane (4).

5. The self-supporting electrode membrane (4) according to any one of claims 1 to 4, wherein the second polymer (14) comprises polytetrafluoroethylene.

6. An electrode (2) comprising the self-supporting electrode membrane (4) according to any one of claims 1 to 5.

7. A secondary battery comprising the electrode (2) according to claim 6.

8. A method for manufacturing an electrode sheet for a self-supporting electrode membrane (4), the method comprising:
preparing a first mixture by mixing active material particles (6) comprising an olivine-type cathode material having an electron-conductive material coating (8), a conductive additive (10), and a first polymer (12) that is not fibrillatable, in a state where the first polymer (12) is fluidized;
preparing a second mixture by mixing the first mixture with a second polymer (14) that is fibrillatable, the second mixture comprising the second polymer (14) in a fibrillated state; and
fabricating the electrode sheet using the second mixture.

9. The method according to claim 8, wherein the first polymer (12) has a melting point of 60°C or higher and 260°C or lower.

10. The method according to claims 8 or 9, wherein the preparing of the second mixture includes mixing the first mixture and the second polymer (14) in the state where the first polymer (12) is fluidized.

11. A method for manufacturing an electrode (2) comprising a self-supporting electrode membrane (4), the method comprising:
preparing a first mixture by mixing active material particles (6) comprising an olivine-type cathode material comprising an electronic conductive material coating (8), a conductive additive (10), and a first polymer (12) that is not fibrillatable, in a state where the first polymer (12) is fluidized;
preparing a second mixture by mixing the first mixture with a second polymer (14) that is fibrillatable, the second mixture comprising the second polymer (14) in a fibrillated state;
fabricating an electrode sheet for the self-supporting electrode membrane (4) using the second mixture; and
fabricating the electrode (2) comprising the self-supporting electrode membrane (4) by bonding the electrode sheet to a current collector (20).
